# EUROPÄISCHE PATENTSCHRIFT

(11) **EP 1 010 334 B1**
(45) Veröffentlichungstag und Bekanntmachung des Hinweises auf die Patenterteilung: **21.09.2005**
(21) Anmeldenummer: 98948689.9
(22) Anmeldetag: 29.07.1998
(51) Int. Cl.: H04Q 3/00

(54) **VERFAHREN ZUR VERHANDLUNG VON DIENSTGÜTEPARAMETERN IN EINEM INTELLIGENTEN NETZ**
METHOD FOR NEGOTIATING SERVICE QUALITY PARAMETERS IN AN INTELLIGENT NETWORK
PROCEDE POUR LA NEGOCIATION DE PARAMETRES DE QUALITE DE SERVICE DANS UN RESEAU INTELLIGENT

(30) Priorität: 28.08.1997 DE 19737587
(43) Veröffentlichungstag der Anmeldung: 21.06.2000
(73) Patentinhaber: SIEMENS AKTIENGESELLSCHAFT, 80333 München (DE)
(72) Erfinder: VAN DER VEKENS, Alexander, D-81373 München (DE)
(86) Internationale Anmeldenummer: PCT/DE1998/002170
(87) Internationale Veröffentlichungsnummer: WO 1999/012359

(56) Entgegenhaltungen:
- EP-A- 0 608 066
- EP-A- 0 669 748
- EP-A- 0 798 898
- WO-A-95/15635
- SEVEQUE F ET AL: "ABC - A STATE-OF-THE-ART PRIVATE NETWORKING SOLUTION" ONDE ELECTRIQUE, Bd. 71, Nr. 5, 1. September 1991, Seiten 49-53, XP000263122
- DOSHI B T ET AL: "PERFORMANCE AND ROLES OF BANDWIDTH AND BUFFER RESERVATION SCHEMES IN HIGH SPEED NETWORKS" FUNDAMENTAL ROLE OF TELETRAFFIC IN THE EVOLUTION OF TELECOMMUNICATI NETWORKS, PROCEEDINGS OF THE 14TH. INTERNATIONAL TELETRAFFIC CONGRESS - ITC 1 JUAN-LES-PINS, JUNE 6 - 10, 1994, Nr. VOL. 1A, 6. Juni 1994, Seiten 23-34, XP000602928 LABETOULLE J;ROBERTS J W (EDS )
- OGINO N: "A MULTI-AGENT BASED BANDWIDTH ALLOCATION SCHEME" IEEE GLOBAL TELECOMMUNICATIONS CONFERENCE, PHOENIX, ARIZONA, NOV. 3 - 8, 1997, Bd. 3, 3. November 1997, Seiten 1706-1713, XP000737813 INSTITUTE OF ELECTRICAL AND ELECTRONICS ENGINEERS

## Beschreibung

Die Erfindung betrifft ein Verfahren der Verhandlung bestimmter für den Diensterbringer und vom Netz selber benötigten Dienstgüteparameter für ein Intelligentes Netz, insbesondere B-ISDN.

Im folgenden wird der Begriff Intelligentes Netz (IN) verwendet für ein Kommunikationsnetz mit einer Architektur und bestimmten ausgezeichneten Netzelementen, die sogenannte IN Dienste zur Verfügung stellen, welche von den Netzteilnehmern verwendet werden können.
Der Begriff Dienstgüteparameter beschreibt alle Parameter einer Verbindung, die in gewissem Rahmen frei wählbar sind und in jeder Verbindung von neuem eingestellt werden, beispielsweise die verwendete Bandbreite einer Verbindung.

In einem Intelligenten Netz gibt es spezielle Netzelemente, die sogenannten Service Control Points (SCP). Jeder Diensterbringer, der neu in ein solches Netz eingefügt wird, muß sich zuvor bei dem SCP bekanntmachen, insbesondere die Art seines Dienstes und seine Adresse. So ist der SCP in der Lage, einen Aufruf eines IN Dienstes von einem beliebigen Netzbenutzer immer an den dafür zuständigen Diensterbringer weiterleiten zu können. Heutzutage ist es zum Beispiel bereits möglich, einen Anruf abhängig von der Uhrzeit zu verschiedenen Diensterbringern (etwa einem Ansagedienst) umzuleiten.
Dabei ruft die Vermittlungsstelle (SSP) ohne weiteres Mitwirken des Dienstaufrufenden zuerst den SCP an, um die benötigte Adressinformation zu erlangen.
Der eigentliche Aufbau der Nutzverbindung zwischen Dienstaufrufendem und Diensterbringer geschieht danach indem der SETUP Befehl (siehe dazu Q.2931) des Dienstaufrufenden an die richtige Adresse weitergeleitet wird. Dabei werden bestimmte für diese Nutzverbindung geltenden Parameter eingestellt bzw. verhandelt.

Beispielsweise geschieht die Verhandlung der bei der Verbindung verwendeten Bandbreite während des Verbindungsaufbaus. Dabei schlägt ein verbindungsaufbauender Teilnehmer mindestens eine Bandbreite vor (required, alternative, minimum acceptable). Der angerufene Teilnehmer und das Kommunikationsnetz selber können dann eine geeignete Bandbreite wählen, die den Anforderungen des verbindungsaufbauenden Teilnehmers angemessen ist. Die gewählte Bandbreite wird dem verbindungsaufbauenden Teilnehmer mitgeteilt und für diese Verbindung verwendet (siehe dazu Q.2725.1, B-ISDN CS-2).

In der Druckschrift EP 0 608 066, "Telecommunications system with active database" wird bereits ein Verfahren beschrieben, welches die Wegewahl (Routing) in Telekommunikationsnetzen verbessert. Eine separate Datenbank enthält aktualisierte Gebührenangaben, d. h. wieviel von Netzbetreibern für die Benutzung von Diensten in diesem Netz verlangt werden. Diese Angaben können zur Auswahl eines kostenoptimalen Weges durch die Netze verwendet werden.

Aufgabe der Erfindung ist es, ein Verfahren anzugeben, durch das eine schnellere, einfache und ressourcensparende Verhandlung der für einen Kommunikationsdienst zur Verfügung gestellten Dienstgüteparameter ermöglicht wird.

Diese Aufgabe wird dadurch gelöst, daß bereits beim Einrichten des neuen Diensteanbieters die möglichen Werte für bestimmte Parameter an den SCP bekannt gegeben werden. Die Verhandlung dieser Parameter geschieht beim Aufruf dieses Dienstes nur noch zwischen dem Nutzer des Dienstes und dem SCP. Der ausgehandelte Wert wird in der weiterzuleitenden SETUP Message eingetragen. Dem Diensterbringer wird so der bereits endgültige Wert mitgeteilt. Dabei ist das Vorgehen nicht auf die Parameter beschränkt, die momentan in der SETUP Message nach Q.2931 beschrieben sind, sondern kann beliebig auf zukünftig benötigte Parameter erweitert werden.

Durch das erfindungsgemäße Vorgehen ergeben sich folgende Vorteile:
- Entlastung der Endsysteme, Datenserver werden nicht mit der Verhandlung von Parametern beschäftigt
- Entlastung des Kommunikationsnetzes, die Nachrichten zur Verbindungsverhandlung müssen nicht mehr durch das gesamte Netz transportiert werden. Eine besonders große Entlastung tritt dann ein, wenn aus bestimmten Gründen die Verbindung nicht zustande kommt.
- Geringerer Aufwand beim Verarbeiten von Aufrufen Die Aufrufe werden in der Regel im Netz über mehrere Netzelemente (SSP, Service Switching Points) geleitet, die Verhandlung der Parameter geschieht dort (abhängig von der Art des Parameters) an allen sogenannten NNI (Network Node Interface) zwischen jeweils zwei SSP. Durch ein erfindungsgemäßes Verhalten wird die Anzahl der Verhandlung der Parameter auf eins begrenzt.
- geringerer Implementierungsaufwand:
   bei den Vermittlungsstellen (SSP) ist es nicht notwendig, die komplette Q.2962 und Q.2725.1 zu implementieren;
   bei einem aufgerufenen System (dem Diensterbringer) muß keine Verhandlungsprozedur implementiert sein.

Vorteilhafte Ausgestaltungen und Weiterbildungen sind in den Unteransprüchen angegeben.

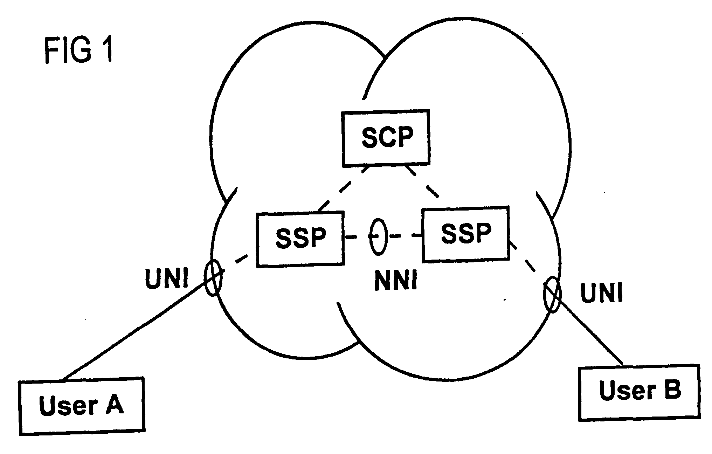

Im folgenden wird die Erfindung anhand von Ausführungsbeispielen erläutert.
Dabei zeigt
Figur 1 ein beispielhaftes Intelligentes Netz, mit einem Dienstaufrufer (User A) und einem Diensterbringer (User B), sowie Vermittlungsstellen (SSP) und mindestens einem SCP (Service Control Point).
Figur 2 zeigt ein beispielhaftes Szenario für einen einfachen IN-Aufruf ('number translation') bei dem eine Bandbreitenverhandlung zwischen einem Multimedia Endgerät (Customer Premises Equipment, CPE)und Service Control Point (SCP) stattfindet.

Bei der Bandbreitenverhandlung zu diesem Dienst werden die Information Elements (IE) aus Q.2931 und Broadband Intelligent Network Application Protocol(B-INAP) Parameter aus Q.1224 verwendet. Die notwendigen Erweiterungen der Dienstelemente werden ausgeführt. Dabei werden die Prozeduren verwendet, wie in Q.2962 beschrieben.

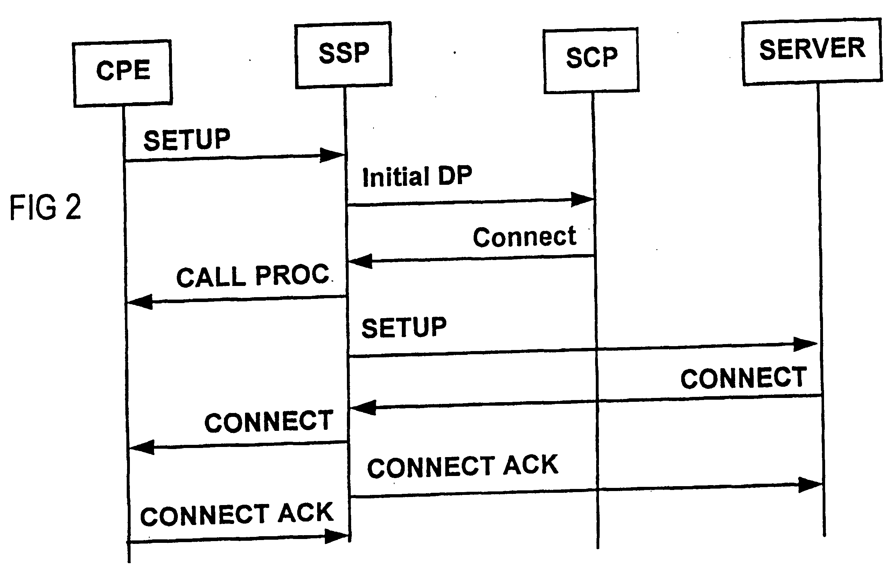

Im folgenden werden die einzelnen Schritte aus Figur 2 erläutert, die während eines Verbindungsaufbaues durchgeführt werden, wenn ein IN-Dienst (beispielsweise 'Number Translation', das Umsetzen einer Telefonnummer in eine andere) aufgerufen wird. Hierbei wird beim Parameter 'ATM Traffic Descriptor' (Bandbreite) erfindungsgemäß vorgegangen. Es werden die bereits aus Q.2931 und Q.1224 bekannten Dienstelemente erweitert (nur die für die Erfindung wesentlichen Dienstelemente sind im folgenden aufgeführt).

### 1. Setup (Q.2931)

Aufruf vom Dienstbenutzer (beispielsweise Multimedia Endgerät, CPE) zur Vermittlungsstelle (SSP)

| | |
|---|---|
| Called party number-IE | |
| Calling party number-IE | (optional) |
| ATM traffic descriptor | |
| Alternative ATM traffic descriptor | (optional) |
| Minimum acceptable ATM traffic descriptor | (optional) |

Ein Netzteilnehmer will einen Dienst des Kommunikationsnetzes IN benutzen. Dafür sendet er diesen Befehl an das Netz mit einer in dem Called Party IE enthaltenen Service Nummer, die den gewünschten Dienst identifiziert. Zusätzlich enthält der Aufruf weitere Informationen über die Güte des gewünschten Dienstes und Adressen.

### InitialDP (Q.1224)

Vermittlungsstelle an Service Control Point

| | |
|---|---|
| Call ID | |
| ATM traffic descriptor | |
| Alternative ATM traffic descriptor | (optional) |
| Minimum Acceptable ATM traffic descriptor | (optional) |

Hierbei wird bisher nur die Adresse des Diensterbringers ermittelt.
Im Gegensatz zum in Q.2962 beschriebenen Verhandlung der Bandbreite werden zusätzliche Parameter überprüft und die Verbindung bereits zu diesem Zeitpunkt abgelehnt, falls die Forderungen des Dienstaufrufers nicht erfüllt werden können. Ist der Parameter verhandelbar wie hier beispielsweise die Bandbreite, so wird diese bereits zu diesem Zeitpunkt endgültig festgelegt.

### Connect (Q.1224)

Service Control Point an Vermittlungsstelle

| | |
|---|---|
| Call ID | |
| Destination Routing Address | |
| ATM traffic descriptor | (optional) |

Dieser Aufruf sorgt dafür, daß der Aufruf SETUP die festgelegte Bandbreite enthält und an die korrekte Adresse weitergeleitet wird.

### CALL PROC (Q.2931)

Vermittlungsstelle an den Dienstaufrufenden
dieses Dienstelement informiert darüber, daß die mit SETUP angeforderte Verbindung im Aufbau begriffen ist und keine weiteren Informationen zu diesem Verbindungsaufruf mehr benötigt werden.

### 2. Setup (Q.2931)

Vermittlungsstelle an Server (Diensterbringer)
hierbei handelt es sich im Prinzip um das 1. Setup vom Dienstaufrufenden an den SSP, wobei in Verhandlung mit dem SCP bereits der endgültige Wert des ATM Descriptor (die vereinbarte Bandbreite) eingetragen wurde, also keine Verhandlung mehr nötig oder möglich ist.

### 1. CONNECT (Q.2931)

Server an Vermittlungsstelle
mit diesem Connect wird dem Dienstaufrufenden angezeigt, daß sein Aufruf akzeptiert wurde.

### 2. CONNECT (Q.2931)

Vermittlungsstelle an Dienstbenutzer

| | |
|---|---|
| ATM traffic descriptor | (optional) |

In dieser Meldung kann dem Dienstaufrufenden die für seine aufgesetzte Verbindung verwendete Bandbreite mitgeteilt werden.

### 1. CONNECT ACK (Q.2931)

Vermittlungsstelle an Server
Bestätigung vom 1. CONNECT
Dies ist die Bestätigung für den Aufgerufenen, daß die gewünschte Verbindung jetzt zustande gekommen ist.

### 2. CONNECT ACK (Q.2931)

CPE an Vermittlungsstelle
Bestätigung vom 2. CONNECT
Diese Bestätigung ist optional, zur Wahrung der Symmetrie.

Für den dienstaufrufenden Benutzer erscheint die Bandbreitenverhandlung ausgeführt wie in Q.2962 empfohlen. Der aufgerufene Teilnehmer (Diensterbringer) jedoch bemerkt nichts von Bandbreitenverhandlungen, da bereits der Service Control Point (SCP) die passende Bandbreite wählt.

Eine weitere beispielhafte Anwendung der Erfindung besteht in der Möglichkeit, mehrere Dienstanbieter für identische Dienste in einem Intelligenten Netz zu etablieren. Diese unterscheiden sich allein in der angebotenen Dienstgüte, wie etwa der zur Verfügung stehenden Bandbreite. Der SCP verbindet einen Dienstaufrufer mit dem Dienstanbieter, der seine Anforderungen am besten erfüllen kann. Dies ist nur möglich, wenn der SCP die entsprechenden Daten bereits bei Einrichtung des Dienstes gespeichert hat.

### Abkürzungsverzeichnis:

- ATM: Asynchronous Transfer Mode
- CPE: Customer Premises Equipment
- IE: Information Element
- IN: Intelligentes Netz
- NNI: Network Node Interface
- SCP: Service Control Point
- SSP: Service Switching Point
- UNI: User-Network Interface

### Literaturverzeichnis:

- Q.1224: ITU-T, Study Group 11:
'Distributed Functional Plane for Intelligent Network - Capability Set-2', Draft Recommendation Q.1224, December 1996
- Q.2725.1: ITU-T, Study Group 11:
'Broadband-integrated Service Digital Network (B-ISDN) User Part - Support of Negotiation during Connection Setup',
Report R 164, March 1996
- Q.2931: ITU-T, Study Group 11:
'Broadband-integrated Service Digital Network (B-ISDN) - Digital Subscriber Signalling System No. 2 (DSS2) - User Network Interface (UNI) Layer 3 Specification for basic Call/Connection Control',
ITU-T Recommendation Q.2931, February 1995
- Q.2962: ITU T, Study Group 11:
'Broadband-integrated Service Digital Network (B-ISDN) - Digital Subscriber Signalling System No. 2 (DSS2) - Connection Characteristics Negotiation during Call/Connection Establishment Phase', Report R167, March 1996

## Patentansprüche

1. Verfahren für ein Intelligentes Kommunikationsnetz zur Verhandlung von Dienstgüteparametern zwischen mindestens einem Kommunikationsendgerät (CPE) und mindestens einem Kommunikationsserver (SERVER), bei dem
- beim Einrichten eines Dienstes im Kommunikationsnetz die möglichen Werte der Dienstgüte-Parameter dem speziellen Netzelement (SCP) bekanntgegeben und dort elektronisch gespeichert werden
- ein Dienstaufruf von einem Kommunikationsendgerät (CPE) an einen Kommunikationsserver (SERVER) über das Kommunikationsnetz von einer Vermittlungsstelle (SSP) zuerst zu dem speziellen Netzelement (SCP) weitergeleitet wird,
**dadurch gekennzeichnet, dass**
- die Verhandlung der Dienstgüteparameter vor dem Aufbau der Nutzverbindung mit einem hierfür vorgesehenen Netzelement (SCP) geschieht, welches verschieden ist von dem Kommunikationsserver, und
- in die zu diesem Dienstaufruf gehörige Datenstruktur vom speziellen Netzelement (SCP) neben der Adresse des Diensterbringers auch die endgültigen Dienstgüteparameter der Verbindung eingetragen werden, und
- dem Kommunikationsserver (SERVER) die für den Verbindungsaufbau endgültig wirksamen Dienstgüteparameter mitgeteilt werden.

2. Verfahren nach Anspruch 1, wobei es sich bei dem Kommunikationsnetz um ein Breitbandkommunikationsnetz und bei dem Dienstgüteparameter um die zur Verfügung gestellte Bandbreite handelt.

3. Verfahren nach einem der vorigen Ansprüche, wobei eine Auswahl eines Diensterbringers abhängig von der vom Dienstbenutzer geforderten Dienstgüte erfolgt.

## Claims

1. Method for an intelligent communications network for negotiating quality of service parameters between at least one communications terminal (CPE) and at least one communications server (SERVER), wherein
- when a service is set up in the communications network the possible values of the quality of service parameters are notified to the special network element (SCP) where they are electronically stored
- a service invocation from a communications terminal (CPE) to a communications server (SERVER) is first forwarded via the communications network from a service switching point (SSP) to the special network element (SCP),
**characterised in that**
- prior to setup of the user traffic connection, negotiation of the quality of service parameters takes place with a network element (SCP) provided for this purpose which is different from the communications server, and
- not only the address of the service provider but also the finalized quality of service parameters of the connection are entered in the data structure associated with this service invocation by the special network element (SCP), and
- the communications server (SERVER) is informed of the finalized quality of service parameters for connection establishment.

2. Method according to claim 1, wherein the communications network is a broadband communications network and the quality of service parameter is the bandwidth provided.

3. Method according to one of the preceding claims, wherein a service provider is selected according to the quality of service required by the service user.

## Revendications

1. Procédé pour un réseau de communication intelligent pour la négociation de paramètres de qualité de service entre au moins un terminal de communication (CPE) et au moins un serveur de communication (SERVER), dans lequel
- lors de la configuration d'un service dans le réseau de communication, les valeurs possibles des paramètres de qualité de service sont annoncés à l'élément de réseau spécial (SCP) et y sont mémorisées électroniquement
- une demande de service par un terminal de communication (CPE) à un serveur de communication (SERVER) est transmise d'abord à l'élément de réseau spécial (SCP) par un central téléphonique (SSP) par l'intermédiaire du réseau de communication,
**caractérisé en ce que**
- la négociation des paramètres de qualité de service est réalisée avant l'établissement de la connexion utile avec un élément de réseau (SCP) prévu à cet effet, lequel est différent du serveur de communication, et
- **en ce que**, outre l'adresse du fournisseur de service, les paramètres définitifs de qualité de service de la connexion sont également enregistrés dans la structure de données appartenant à cet élément de réseau spécial (SCP), et
- **en ce que** les paramètres de qualité de service définitivement efficaces pour l'établissement de la connexion sont communiqués au serveur de communication (SERVER).

2. Procédé selon la revendication 1, dans lequel le réseau de communication est un réseau de communication à large bande, et dans lequel les paramètres de qualité de service sont la largeur de bande mise à disposition.

3. Procédé selon l'une quelconque des revendications précédentes, dans lequel une sélection d'un fournisseur de services est réalisée en fonction de la qualité de service demandée par l'utilisateur du service.
